(19) **Europäisches Patentamt / European Patent Office / Office européen des brevets**

(11) **EP 4 674 651 A1**

(12) **EUROPEAN PATENT APPLICATION**
published in accordance with Art. 153(4) EPC

(43) Date of publication:
07.01.2026 Bulletin 2026/02

(21) Application number: 24795430.8

(22) Date of filing: 04.01.2024

(51) International Patent Classification (IPC):
**B60G 13/00** (2006.01)

(86) International application number:
**PCT/CN2024/070641**

(87) International publication number:
**WO 2024/222040 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.04.2023 CN 202310473696**

(71) Applicant: **BYD Company Limited**
**Guangdong 518118 (CN)**

(72) Inventors:
• **YAO, Yuan**
**Shenzhen, Guangdong 518118 (CN)**
• **LIAO, Yinsheng**
**Shenzhen, Guangdong 518118 (CN)**
• **REN, Chong**
**Shenzhen, Guangdong 518118 (CN)**
• **HUANG, Shiliang**
**Shenzhen, Guangdong 518118 (CN)**
• **LU, Yi**
**Shenzhen, Guangdong 518118 (CN)**

(74) Representative: **Aldridge, Henry Alexander**
**Venner Shipley LLP**
**200 Aldersgate**
**London EC1A 4HD (GB)**

(54) **CONTROL METHOD AND CONTROL SYSTEM FOR SUSPENSION ASSEMBLY, AND VEHICLE**

(57) Provided are a control method and control system for a suspension assembly, a storage medium, and a vehicle. The suspension assembly (100) includes a shock absorber (2) and a plurality of control arms. The shock absorber is connected between a vehicle body and one of the plurality of control arms. The control method includes: obtaining road condition information and a current height of the vehicle body; determining a vehicle body adjustment height based on the road condition information and the current height of the vehicle body; and controlling the shock absorber based on the vehicle body adjustment height to increase a ground clearance of the vehicle body, so that a vehicle safely crosses an obstacle.

Obtain road condition information and a current height of the vehicle body

↓

Determine a vehicle body adjustment height based on the road condition information and the current height of the vehicle body

↓

Control the shock absorber based on the vehicle body adjustment height to increase a ground clearance of the vehicle body, so that the vehicle safely crosses an obstacle

FIG. 1

# Description

## CROSS-REFERENCE TO RELATED APPLICATIONS

This application claims priority to Chinese Patent Application No. "202310473696.9", filed by BYD Company Limited on April 25, 2023 and entitled "CONTROL METHOD AND CONTROL SYSTEM FOR SUSPENSION ASSEMBLY, AND VEHICLE", which is incorporated herein by reference in its entirety.

## TECHNICAL FIELD

This application relates to the field of vehicle technologies, and in particular, to a control method and control system for a suspension assembly, and a vehicle.

## BACKGROUND

Currently, a vehicle is provided with an air suspension. A height of the vehicle is adjusted by adjusting a height of an air spring. Because the height of the air spring changes due to a pressure in an airbag, a height of a vehicle body cannot be quickly adjusted. As a result, efficiency in adjusting the height of the vehicle body is low, and a response is slow.

## SUMMARY

This application is intended to resolve one of the technical problems in the related art at least to some extent.

Therefore, this application provides a control method for a suspension assembly to improve an obstacle-crossing capability of a vehicle.

This application further provides a control system for a suspension assembly.

This application further provides a vehicle.

In a control method for a suspension assembly according to an embodiment of this application, the suspension assembly includes a shock absorber and a plurality of control arms. The shock absorber is connected between a vehicle body and one of the plurality of control arms. The control method includes: obtaining road condition information and a current height of the vehicle body; determining a vehicle body adjustment height based on the road condition information and the current height of the vehicle body; and controlling the shock absorber based on the vehicle body adjustment height to increase a ground clearance of the vehicle body, so that a vehicle safely crosses an obstacle.

Therefore, the shock absorber is controlled to adjust the vehicle body to a height position that is suitable for the vehicle body to pass through a road section ahead in a traveling direction of the vehicle, thereby satisfying a passage requirement of the vehicle. Alternatively, the obstacle-crossing capability of the vehicle is sufficiently improved by controlling the vehicle to jump, thereby effectively preventing the vehicle from being scraped by an obstacle on a road surface, and improving driving safety of the vehicle.

Additional aspects and advantages of this application will be set forth in part in the following description, and in part will become apparent from the following description, or may be learned through the practice of this application.

## BRIEF DESCRIPTION OF DRAWINGS

FIG. 1 is a first flowchart of a control method for a suspension assembly according to an embodiment of this application;
FIG. 2 is a second flowchart of a control method for a suspension assembly according to an embodiment of this application;
FIG. 3 is a diagram of a control system for a suspension assembly according to an embodiment of this application;
FIG. 4 is a diagram of jumping of a vehicle according to an embodiment of this application;
FIG. 5 is a diagram of a road surface according to an embodiment of this application;
FIG. 6 is a diagram of an F-V damping force curve of a shock absorber according to an embodiment of this application;
FIG. 7 is a diagram of a suspension assembly according to an embodiment of this application; and
FIG. 8 is a diagram of a structure of a shock absorber according to an embodiment of this application.

## DESCRIPTION OF EMBODIMENTS

Embodiments of this application are described in detail below, examples of which are illustrated in the accompanying drawings. Same or similar reference numerals throughout indicate same or similar elements or elements having same or similar functions. The embodiments described below with reference to the accompanying drawings are examples and are intended to explain this application, and shall not be construed as a limitation on this application.

A suspension assembly according to an embodiment of this application includes a shock absorber 2 and a plurality of control arms. The shock absorber 2 is connected between a vehicle body and one of the plurality of control arms. The shock absorber may support a sprung mass of a vehicle, and further, may cushion vibration at a wheel end caused by excitation of a road surface, thereby improving comfort of the vehicle.

In this application, the suspension assembly 100 includes a subframe assembly 1, a shock absorber 2, an upper control arm 3, a steering knuckle 4, a front lower control arm 5, and a rear lower control arm 6.

The subframe 1 is fastened to the vehicle body.

The subframe 1 and the vehicle body may be connected by using a bolt (such as fastened by using a bolt). An inner end of the upper control arm 3 is connected to the vehicle body by using a bushing, and an outer end of the upper control arm 3 is connected to the steering knuckle 4 by using a ball joint. An inner end of the front lower control arm 5 is connected to the subframe 1 by using the bushing, and an outer end of the front lower control arm 5 is connected to the steering knuckle 4 by using the ball joint. An inner end of the rear lower control arm 6 is connected to the subframe 1 by using the bushing, and an outer end of the rear lower control arm 6 is connected to the steering knuckle 4 by using the ball joint. An upper end of the shock absorber is fastened to the vehicle body, and a lower end of the shock absorber is connected to the front lower control arm 5 by using the bushing. Therefore, the suspension assembly is constructed as a double-wishbone suspension structure.

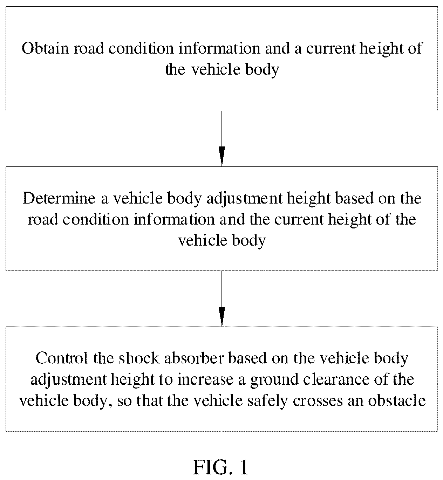

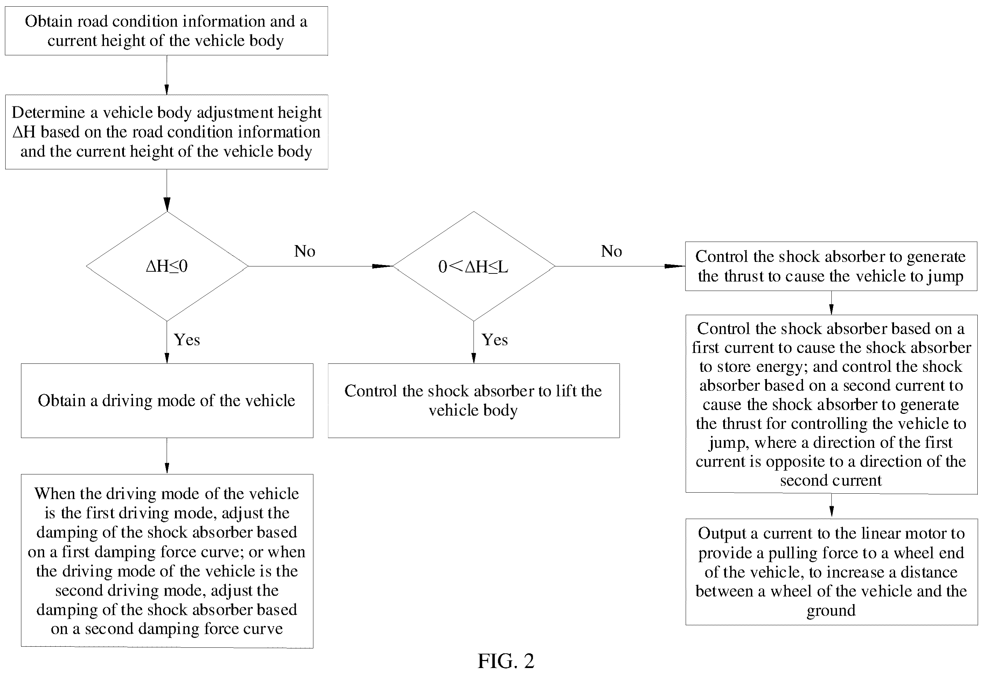

A control method for a suspension assembly according to an embodiment of this application will now be described with reference to FIG. 1 to FIG. 8.

The control method includes: obtaining road condition information and a current height of the vehicle body; determining a vehicle body adjustment height based on the road condition information and the current height of the vehicle body; and controlling the shock absorber based on the vehicle body adjustment height to increase a ground clearance of the vehicle body, so that a vehicle safely crosses an obstacle.

It should be noted that "the current height of the vehicle body" may be understood as a ground clearance of the vehicle body in a current state, and "the vehicle body adjustment height" may be understood as a height of the vehicle body that needs to be adjusted based on the current height of the vehicle body when the vehicle body passes through a road section ahead.

The vehicle body adjustment height may be determined based on the road condition information and the current height of the vehicle body that are obtained, and a shock absorber adjusts the height of the vehicle body or controls the vehicle to jump, thereby improving an obstacle-crossing capability of the vehicle by increasing the ground clearance of the vehicle body, ensuring that the vehicle can pass through a road section ahead in a traveling direction smoothly, and ensuring passability of the vehicle.

In a traveling process of the vehicle, road condition information ahead on a traveling path of the vehicle is obtained, and the road condition information is combined with current height information of the vehicle body, thereby determining whether the vehicle can pass through the road section ahead at the current height. If a passage requirement of the vehicle cannot be satisfied, the height of the vehicle body needs to be adjusted, or the vehicle is controlled to jump, to increase the ground clearance of the vehicle body, maximize the obstacle-crossing capability of the vehicle, and cause the vehicle to pass through the road section ahead smoothly.

It may be understood that, when there is a protrusion structure on a road surface, the vehicle has a risk of scraping against a chassis when passing through the road section, thereby easily causing damage to the vehicle, and affecting driving safety. When there is a pit structure on a road surface, if a wheel falls into the pit structure when the vehicle passes through the road section, the vehicle has a risk of scraping against the chassis and an edge of the pit structure, thereby causing damage to the vehicle, and affecting driving safety.

In this application, the vehicle body adjustment height is determined based on the road condition information and the current height of the vehicle body, and the shock absorber is controlled based on the vehicle body adjustment height, thereby increasing the ground clearance of the vehicle body, and adjusting the vehicle body to a height that is suitable for the vehicle body to pass through the road section ahead. An adjustment manner includes raising the height of the vehicle body or controlling the vehicle to jump.

In a control method for a suspension assembly according to an embodiment of this application, the shock absorber is controlled to increase the ground clearance of the vehicle body, thereby improving an obstacle-crossing capability of the vehicle, and satisfying a passage requirement of the vehicle.

In some embodiments of this application, the road condition information includes a height of an obstacle on a road surface.

The obstacle may be a protrusion structure, a pit structure, or the like on the road surface.

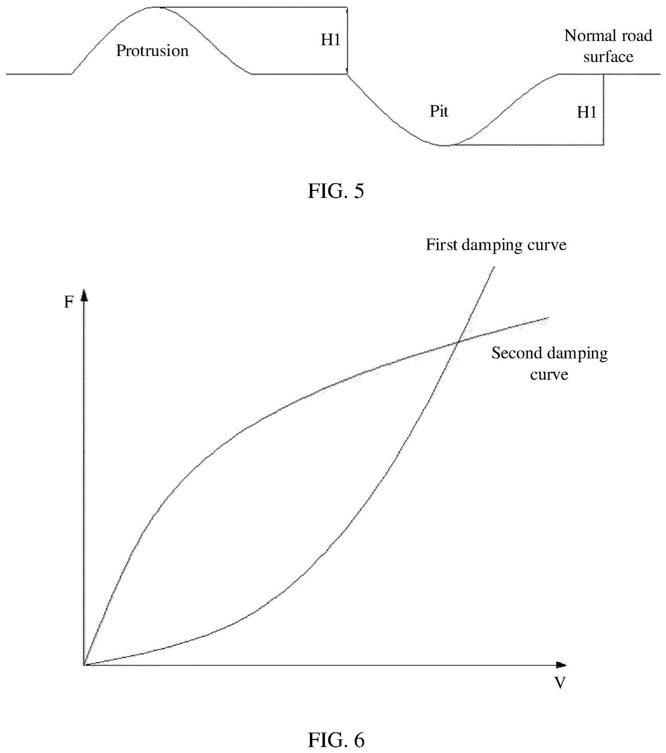

With reference to FIG. 5, when the obstacle is constructed as a protrusion, "the height of the obstacle on the road surface" is a vertical distance between a highest point of the protrusion and the road surface. When the obstacle is constructed as a pit, "the height of the obstacle on the road surface" is a vertical distance between a lowest point of the pit and the road surface. That is, the road condition information is an absolute height value between the obstacle (the protrusion or the pit) and the road surface.

It may be understood that, when a height value of the obstacle on the road surface is greater than the current height of the vehicle body, the vehicle scrapes against the obstacle when passing through the road section in which an obstacle exists, thereby causing damage to the vehicle.

In the embodiment of this application, the step of determining the vehicle body adjustment height based on the road condition information and the current height of the vehicle body includes: determining the vehicle body adjustment height according to the following formula: $\triangle H = H1 - h$. $\triangle H$ is the vehicle body adjustment height, $H1$ is the height of the obstacle on the road surface, and $h$ is the current height of the vehicle body.

$\triangle H$ is a height parameter by which the vehicle body needs to be adjusted when the vehicle body passes through a road section with an obstacle without being scraped. When the vehicle body is adjusted upward by ΔH by using the shock absorber, the vehicle may safely pass through the road section with the obstacle.

ΔH is determined by H1 and h. When H1≤h, ΔH is a negative value. In this case, the passage requirement of the vehicle can be satisfied without adjusting the height of the vehicle body. When H1>h, ΔH is a positive value. The vehicle body needs to be adjusted upward by using the shock absorber to satisfy the passage requirement of the vehicle.

It should be noted that the vehicle body adjustment height ΔH is a difference between the height H1 of the obstacle on the road surface and the current height h of the vehicle body. In an actual application, an actual adjustment height of the vehicle body may be △H+H2, H2 is a reserved height value (such as 20 mm, 30 mm, or the like), so that after the height of the vehicle body is adjusted, a specific gap may be reserved between the vehicle body and the obstacle to improve passability of the vehicle.

In some embodiments of this application, controlling the shock absorber based on the vehicle body adjustment height includes: when the vehicle body adjustment height is less than or equal to zero, obtaining a driving mode of the vehicle; and adjusting damping force of the shock absorber based on the driving mode of the vehicle.

When ΔH ≤ 0, the passage requirement of the vehicle can be satisfied without adjusting the height of the vehicle body upward. Therefore, the damping force of the shock absorber may be adjusted based on the driving mode of the vehicle, thereby improving driving comfort of the vehicle.

As shown in FIG. 6, in the embodiment of this application, the driving mode of the vehicle includes a first driving mode and a second driving mode. The adjusting the damping force of the shock absorber based on the driving mode of the vehicle includes: when the driving mode of the vehicle is the first driving mode, adjusting the damping force of the shock absorber based on a first damping force curve; or when the driving mode of the vehicle is the second driving mode, adjusting the damping force of the shock absorber based on a second damping force curve. The first driving mode is different from the second driving mode, and change rates of the first damping force curve and the second damping force curve are also different.

Both the first damping force curve and the second damping force curve are diagrams of curves in which a damping force F is associated with a traveling velocity V.

With reference to FIG. 6, in the first damping force curve and the second damping force curve, the damping force of the shock absorber gradually increases with the traveling velocity of the vehicle. When the vehicle is in the first driving mode, a damping force of the shock absorber is adjusted based on the first damping force curve. When the vehicle is in the second driving mode, the damping force of the shock absorber is adjusted based on the second damping force curve. The first driving mode may be a sport-type driving mode, and the second driving mode may be a comfort-type driving mode. Certainly, the driving mode of the vehicle is not limited to the first driving mode and the second driving mode, and may further include a third driving mode, a fourth driving mode, or the like. Correspondingly, the damping force of the shock absorber may be adjusted based on an F-V damping force curve corresponding to the driving mode.

In some other embodiments of this application, controlling the shock absorber based on the vehicle body adjustment height includes: when the vehicle body adjustment height is less than or equal to zero, adjusting the damping force of the shock absorber based on the road condition information. For example, if the road condition ahead in a traveling direction of the vehicle is good and suitable for comfort, the damping force of the shock absorber is adjusted adaptively (for example, reduced). If the road condition ahead in the traveling direction of the vehicle is poor and suitable for handling stability, the damping force of the shock absorber is adjusted adaptively (for example, increased).

In some embodiments of this application, controlling the shock absorber based on the vehicle body adjustment height includes: obtaining a maximum height of the vehicle body; determining the adjustable height of the vehicle body based on the maximum height of the vehicle body and the current height of the vehicle body, that is, L; and when the vehicle body adjustment height is greater than zero and less than or equal to the adjustable height of the vehicle body, controlling the shock absorber to lift the vehicle body. The adjustable height is configured to: be determined based on the maximum height of the vehicle body and the current height of the vehicle body.

"The maximum height of the vehicle body" is a maximum ground clearance in which the vehicle body can be adjusted by using the shock absorber. In this case, the adjustable height of the vehicle body is determined based on the maximum height of the vehicle body and the current height of the vehicle body. "The adjustable height" is a height value by which the vehicle body may be adjusted upward through a lifting action of the shock absorber.

When the vehicle body adjustment height satisfies 0<△H≤L, the shock absorber may be controlled to lift the vehicle body based on the vehicle body adjustment height ΔH, thereby adjusting the height of the vehicle body, and improving passability of the vehicle.

In some embodiments of this application, the adjustable height of the vehicle body is determined according to the following formula: L=Hmax-h. L is the adjustable height of the vehicle body, and Hmax is the maximum height of the vehicle body.

It should be noted that Hmax is a preset value in the control method, and h is an obtained current height of the vehicle body. The adjustable height L of the vehicle body may be obtained based on the maximum height Hmax of the vehicle body and the current height h of the vehicle body. h may be a parameter obtained in real time, that is, the current height of the vehicle body after the shock absorber is controlled to adjust the height of the vehicle body once or a plurality of times.

In some other embodiments of this application, controlling the shock absorber based on the vehicle body adjustment height includes: obtaining the maximum height of the vehicle body; determining the adjustable height of the vehicle body based on the maximum height of the vehicle body and the current height of the vehicle body, that is, L; and when the vehicle body adjustment height is greater than the adjustable height of the vehicle body, controlling the shock absorber to generate a thrust to cause the vehicle to jump. The adjustable height is configured to: be determined based on the maximum height of the vehicle body and the current height of the vehicle body.

It may be understood that, when the vehicle body adjustment height satisfies ΔH>L, in this case, the shock absorber is only controlled to lift the vehicle body, and there is still a road condition in which the vehicle scrapes against an obstacle. Therefore, the shock absorber is controlled to generate the thrust to cause the vehicle to jump. This manner adjusts the vehicle body to a higher ground clearance position when compared with a lifting manner.

In an embodiment of this application, controlling the shock absorber to generate the thrust to cause the vehicle to jump includes: controlling the shock absorber based on a first current to cause the shock absorber to store energy; and controlling the shock absorber based on a second current to cause the shock absorber to generate the thrust for controlling the vehicle to jump, where a direction of the first current is opposite to a direction of the second current.

When the shock absorber is controlled by the first current, the shock absorber may generate a downward pulling force, so that the vehicle body may move downward, and the shock absorber may store energy during downward movement of the vehicle body.

After the shock absorber stores energy, the shock absorber is controlled by the second current. The shock absorber generates an upward thrust, and the energy stored by the shock absorber may be released, so that under a combined effect in which the shock absorber is controlled by the second current to generate the upward thrust and the stored energy is released, a sprung mass of the vehicle is driven to perform acceleration movement upward until a wheel in the unsprung mass leaves the ground. A system of the sprung mass and the unsprung mass may perform uniformly decelerated motion with an acceleration of g and with an initial velocity of V, until the sprung mass and the unsprung mass fall to a point in which a wheel makes contact with the ground.

In some embodiments of this application, the step of controlling the shock absorber based on the first current to cause the shock absorber to store energy includes: outputting a current in a first direction to a linear motor to compress an elastic device, so that the elastic device stores energy. The shock absorber includes the linear motor and the elastic device. In some embodiments of this application, the step of controlling the shock absorber based on the second current to cause the shock absorber to generate the thrust for controlling the vehicle to jump includes: outputting a current in a second direction to the linear motor, and controlling the elastic device to release the stored energy to jointly generate an upward thrust on the vehicle body, so that the vehicle jumps to safely avoid an obstacle.

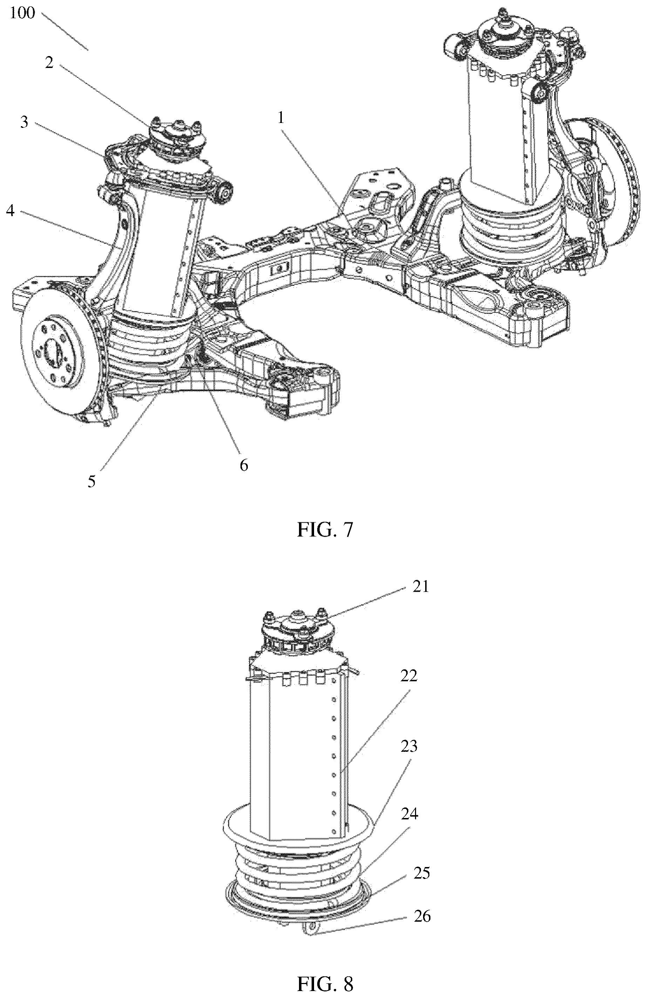

With reference to FIG. 8, it should be noted that a spring 24 (that is, the elastic device) is disposed in the shock absorber 2. When the first current controls the shock absorber 2 to generate a downward pulling force, the spring 24 is compressed downward to store energy. In addition, when the second current controls the shock absorber 2 to generate an upward thrust, the spring 24 releases energy to increase the upward thrust of the shock absorber 2. In this case, the upward thrust applied by the shock absorber 2 to the sprung mass may be up to 7800 N (the upward thrust is not limited thereto, and may be designed based on the sprung mass, the unsprung mass, and the like of the vehicle), thereby satisfying a jumping requirement of the vehicle.

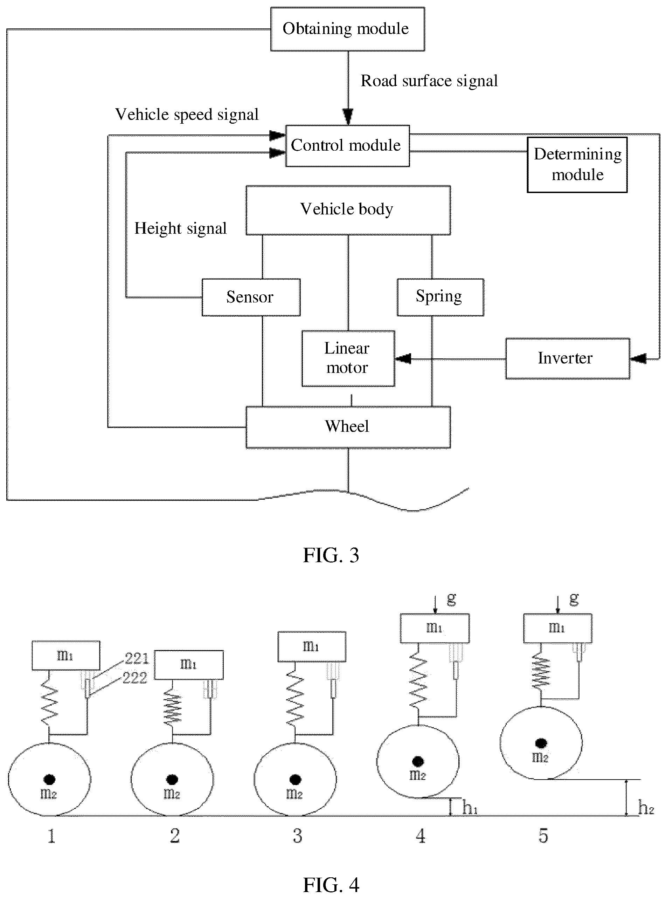

It may be understood that, when the spring 24 is at a compression limit, a rebound force applied by the spring 24 to the vehicle body is also up to a maximum value, and cooperates with the upward thrust generated by the shock absorber 2 in the control of the second current, thereby driving the sprung mass of the vehicle to perform acceleration movement upward, and causing the vehicle to jump. With reference to FIG. 4, the sprung mass is m1, and the unsprung mass is m2.

In some embodiments of this application, the first current and the second current are determined based on the vehicle body adjustment height, the adjustable height, and an elastic parameter of the elastic device.

In a process of controlling the shock absorber to generate the thrust to cause the vehicle to jump, magnitudes of the first current and the second current need to be determined based on the foregoing parameters (the vehicle body adjustment height, the adjustable height, and the elastic parameter of the elastic device) to implement an energy storage action or a jumping action of the suspension system. Based on the parameters of the vehicle body adjustment height and the adjustable height, it may be determined whether the vehicle needs to be controlled to jump. If the vehicle body adjustment height is greater than the adjustable height, the vehicle needs to be controlled to jump. In addition, the first current and the second current may be determined based on the vehicle body adjustment height and the elastic parameter of the elastic device to implement a jumping action of the vehicle by controlling the linear motor to compress the elastic device and controlling the linear motor to push the vehicle body upward.

It may be understood that, when the shock absorber is controlled based on the first current, a parameter of the first current is controlled to adjust a driving force output by the linear motor, thereby adjusting an energy storage capacity of the elastic device. When the shock absorber is controlled based on the second current, a parameter of the second current is controlled to adjust the driving force output by the linear motor. A jumping height of the vehicle may be adjusted by determining the first current and the second current. For example, stored energy of the elastic device is increased, and an upward thrust applied by the linear motor to the vehicle body under the second current is increased. In this case, the jumping height of the vehicle may be increased.

In some embodiments of this application, the shock absorber 2 includes an upper support 21, a damper 22, an upper tray 23, a spring 24, a lower tray 25, and a lower mounting fork 26. The upper support 21 is fastened to the damper 22 by using a bushing. The upper tray 23 is fastened to a stator 221 part of the damper 22. The lower tray 25 is fastened to a rotor 222 part of the damper 22. The spring 24 is mounted between the upper tray 23 and the lower tray 25. Both ends of the spring 24 are respectively fastened to the upper tray 23 and the lower tray 25 by rubber pads. The lower mounting fork 26 is fastened to the rotor 222 part of the damper 22.

The upper support 21 is fastened to the top of a vehicle body tower. The lower mounting fork 26 is fastened to a suspension arm (that is, the control arm). The shock absorber is arranged between the vehicle body and the suspension. In this case, the shock absorber plays a role of supporting the sprung mass, and the shock absorber may also cushion an impact on the unsprung mass caused by excitation of the road surface, thereby improving comfort of the vehicle.

The damper 22 is a linear motor damper 22. A magnitude of a current may be controlled by controlling an inverter, thereby adjusting a damping force of the shock absorber. In addition, the magnitude of the current is adjusted by controlling the inverter, thereby increasing the thrust of the shock absorber. The linear motor damper 22 has a fast response speed, so that the height of the vehicle body may be quickly adjusted.

With reference to FIG. 4, in some embodiments of this application, after the step of outputting the second current in the second direction to the linear motor and controlling the elastic device to release the stored energy to jointly generate the upward thrust on the vehicle body, so that the vehicle jumps, the control method further includes: outputting a current to the linear motor to provide a pulling force to a wheel end of the vehicle, to increase a distance between a wheel of the vehicle and the ground.

With reference to FIG. 4, after the vehicle jumps, when the shock absorber is not controlled by the first current, the ground clearance of the wheel is h1. When the shock absorber is controlled by the first current, the ground clearance of the wheel is increased, and may be up to h2.

After the vehicle jumps (that is, the wheel leaves the ground), the shock absorber may be controlled by the first current. In this case, the shock absorber may drive the unsprung mass to approach a side of the vehicle body, thereby raising the wheel to a higher position, increasing the ground clearance of the wheel, and improving the obstacle-crossing capability of the vehicle.

In some embodiments of this application, the shock absorber is a linear motor. The control method further includes: when the vehicle lands, converting kinetic energy of the wheel into electric energy by using the linear motor to be fed back to a battery of the vehicle. Therefore, the linear motor is controlled by simple harmonic vibration of the vehicle body to generate electricity, and the electricity is stored by the battery of the vehicle.

When the system of the sprung mass and the unsprung mass falls to a point in which a wheel makes contact with the ground, the sprung mass starts to perform simple harmonic motion. In this case, a vibration frequency of the sprung mass is high, that is, a working frequency of the shock absorber is high. Therefore, power supply to the linear motor can be stopped. During vibration of the sprung mass, a coil of the stator 221 of the shock absorber cuts a magnetic field of a permanent magnet in the rotor 222 to generate current. Potential energy of the sprung mass is converted into electric energy by using the linear motor, and the generated electric energy is recycled.

With reference to FIG. 4, an action process in which the suspension assembly controls the shock absorber to achieve jumping according to the embodiment of this application is described:

when the suspension assembly is in state 1, the state is a normal driving or parking state;

when the suspension assembly is in state 2, the shock absorber is controlled based on the first current, and the stator 221 and the rotor 222 move toward each other, so that the shock absorber stores energy (in this case, the spring is compressed);

when the suspension assembly is in state 3, the shock absorber is controlled based on the second current, the stator 221 and the rotor 222 move in opposite directions, the shock absorber applies an upward thrust to the sprung mass, and the spring releases energy (in this case, the spring is extended);

when the suspension assembly is in state 4, the vehicle jumps; and

when the suspension assembly is in state 5, the shock absorber is controlled based on the first current, and the stator 221 and the rotor 222 move toward each other to drive the unsprung mass to move upward, thereby increasing the ground clearance of the wheel.

Therefore, in the control method for the suspension assembly in this application, the shock absorber may have different functions in different modes. The vehicle body may be lifted to adjust the height of the vehicle body. An upward thrust may also be generated after energy is stored, thereby causing the vehicle to jump, and fully improving the obstacle-crossing capability of the vehicle. In addition, the damping force of the shock absorber may be further adjusted based on the driving mode of the vehicle, thereby improving comfort and control performance in a driving process of the vehicle.

In a control system for a suspension assembly according to an embodiment of this application, the suspension assembly includes a shock absorber and a plurality of control arms. The shock absorber is connected between a vehicle body and one of the plurality of control arms. The control system includes: an obtaining module, configured to obtain road condition information and a current height of the vehicle body; a determining module, configured to determine a vehicle body adjustment height based on the road condition information and the current height of the vehicle body; and a control module, configured to control the shock absorber based on the vehicle body adjustment height to adjust a height of the vehicle body or control a vehicle to jump.

The obtaining module may include a sensor. The sensor is configured to detect the road condition information. For example, the sensor is constructed as a radar sensor or the like, which is not limited herein.

In some embodiments of this application, controlling the shock absorber based on the vehicle body adjustment height includes: when the vehicle body adjustment height is less than or equal to zero, the obtaining module obtaining a driving mode of the vehicle; and the control module adjusting damping force of the shock absorber based on the driving mode of the vehicle.

In some embodiments of this application, controlling the shock absorber based on the vehicle body adjustment height includes: the obtaining module obtaining a maximum height of the vehicle body; the determining module determining the adjustable height of the vehicle body based on the maximum height of the vehicle body and the current height of the vehicle body; and when the vehicle body adjustment height is greater than zero and less than or equal to the adjustable height of the vehicle body, the control module controlling the shock absorber to lift the vehicle body.

In some embodiments of this application, controlling the shock absorber based on the vehicle body adjustment height includes: the obtaining module obtaining the maximum height of the vehicle body; the determining module determining the adjustable height of the vehicle body based on the maximum height of the vehicle body and the current height of the vehicle body; and when the vehicle body adjustment height is greater than the adjustable height of the vehicle body, the control module controlling the shock absorber to generate a thrust to cause the vehicle to jump.

In an embodiment of this application, the control module controls the shock absorber to generate the thrust to cause the vehicle to jump, including: the control module controlling the shock absorber based on a first current to cause the shock absorber to store energy; and the control module controlling the shock absorber based on a second current to cause the shock absorber to generate the thrust for controlling the vehicle to jump, where a direction of the first current is opposite to a direction of the second current.

In some embodiments of this application, after the step of outputting the second current in the second direction to the linear motor and controlling the elastic device to release the stored energy to jointly generate the upward thrust on the vehicle body, so that the vehicle jumps, the control method further includes: outputting a current to the linear motor to provide a pulling force to a wheel end of the vehicle, to increase a distance between a wheel of the vehicle and the ground.

In some embodiments of this application, the shock absorber is a linear motor. When the vehicle lands, the control system stops supplying power to the shock absorber, and the linear motor is controlled by simple harmonic motion of the vehicle body to generate electricity.

In a vehicle according to an embodiment of this application, a processor executes a control program of a suspension assembly stored in a memory to control the shock absorber to have different functions in different modes. A vehicle body may be lifted to adjust a height of the vehicle body. An upward thrust may also be generated after energy is stored, thereby causing the vehicle to jump, and fully improving the obstacle-crossing capability of the vehicle. In addition, the damping force of the shock absorber may be further adjusted based on the driving mode of the vehicle, thereby improving comfort and control performance in a driving process of the vehicle.

The memory may be but is not limited to a random access memory (Random Access Memory, RAM), a read-only memory (Read-Only Memory, ROM), a programmable read-only memory (Programmable Read-Only Memory, PROM), an erasable programmable read-only memory (Erasable Programmable Read-Only Memory, EPROM), an electric erasable programmable read-only memory (Electric Erasable Programmable Read-Only Memory, EEPROM), or the like. The memory is configured to store a program. After receiving an execution instruction, the processor executes the program to implement steps of the control method for the suspension assembly described in the foregoing embodiments.

The processor may be an integrated circuit chip and has a signal processing capability. The processor may be a general purpose processor, including a central processing unit (Central Processing Unit, CPU), a network processor (Network Processor, NP), and the like; or a digital signal processor (DSP), an application-specific integrated circuit (ASIC), a field programmable gate array (FPGA) or another programmable logic device, a discrete gate or a transistor logic device, or a discrete hardware component. The methods, the steps, and the logical block diagrams that are disclosed in embodiments of this application may be implemented or performed. The general-purpose processor may be a microprocessor, or the processor may be any conventional processor or the like.

It should be noted that logic and/or steps represented in flowcharts or otherwise described herein, for example, may be considered to be a sequenced list of executable instructions for implementing logical functions, and may be implemented in any computer-readable medium for use by an instruction execution system, apparatus, or device (for example, a computer-based system, a system including a processor, or another system that may fetch and execute instructions from the instruction execution system, apparatus, or device), or for use in combination with the instruction execution system, apparatus, or device. In this specification, a "computer-readable medium" may be any apparatus that may contain, store, convey, propagate, or transmit a program for use by the instruction execution system, apparatus, or device or for use in combination with the instruction execution system, apparatus, or device. An example (a non-exhaustive list) of the computer-readable medium includes: an electrical connection portion (an electronic apparatus) having one or more wirings, a portable computer disk cartridge (a magnetic apparatus), a random access memory (RAM), a read-only memory (ROM), an erasable programmable read-only memory (EPROM or a flash memory), an optic fiber apparatus, and a portable compact disc read-only memory (CDROM). In addition, the computer-readable medium may even be paper or another suitable medium on which the program may be printed, because the program may be obtained electronically, for example, by optically scanning the paper or another medium, and then editing, interpreting, or processing the paper or another medium in other suitable manners as necessary. Then, the program is stored in a computer memory.

It should be understood that each part of this application may be implemented by hardware, software, firmware, or a combination thereof. In the foregoing implementations, a plurality of steps or methods may be implemented by software or firmware that is stored in a memory and that is executed by a suitable instruction execution system. For example, if the plurality of steps or methods are implemented by hardware, as in another implementation, the plurality of steps or methods may be implemented by any one or a combination of the following techniques known in the art: a discrete logic circuit having a logic gate circuit for implementing a logic function of a data signal, an application-specific integrated circuit having an appropriate combinational logic gate circuit, a programmable gate array (PGA), a field programmable gate array (FPGA), and the like.

In the present disclosure, unless otherwise clearly specified and defined, the description that a first feature is "above" or "below" a second feature may indicate a direct contact between the first feature and the second feature, or an indirect contact between the first feature and the second feature through an intermediary medium. Moreover, the description that the first feature is "above", "over" or "on" the second feature may indicate that the first feature is directly above or obliquely above the second feature, or simply indicate that the first feature is at a higher horizontal level than the second feature. The description that the first feature is "below", "beneath" or "under" the second feature may indicate that the first feature is directly below or obliquely below the second feature, or simply indicate that the first feature is at a lower horizontal level than the second feature.

In the description of this specification, descriptions with reference to terms such as "one embodiment", "some embodiments", "an example", "a specific example", or "some examples", and the like mean that specific features, structures, materials, or characteristics described in connection with this embodiment or example are included in at least one embodiment or example of this application. In this specification, the schematic representations of the foregoing terms are not necessarily aimed at the same embodiment or example. Furthermore, specific features, structures, materials, or characteristics described may be combined in any one or more embodiments or examples in a suitable manner. In addition, a person skilled in the art may combine and integrate different embodiments or examples described in this specification and features of different embodiments or examples without contradiction.

Although embodiments of this application have been shown and described above, it should be understood that the foregoing embodiments are examples and should not be construed as limiting this application. A person skilled in the art may make changes, modifications, substitutions, and variations to the foregoing embodiments within the scope of this application.

**Claims**

1. A control method for a suspension assembly, wherein the suspension assembly comprises a shock absorber and a plurality of control arms, the shock absorber is connected between a vehicle body and one of the plurality of control arms, and the control method comprises:

   obtaining road condition information and a current height of the vehicle body;
   determining a vehicle body adjustment height based on the road condition information and the current height of the vehicle body; and
   controlling the shock absorber based on the vehicle body adjustment height to increase a ground clearance of the vehicle body, so that a vehicle safely crosses an obstacle.

2. The control method for the suspension assembly according to claim 1, wherein the step of determining the vehicle body adjustment height based on the road condition information and the current height of the vehicle body comprises:

   determining the vehicle body adjustment height according to the following formula:

   $$\triangle H = H1 - h,$$

   wherein
   △H is the vehicle body adjustment height, H1 is a height of an obstacle on a road surface, and h is the current height of the vehicle body, wherein the road condition information comprises the height of the obstacle on the road surface.

3. The control method for the suspension assembly according to claim 1 or 2, wherein controlling the shock absorber based on the vehicle body adjustment height comprises:

   when the vehicle body adjustment height is less than or equal to zero, obtaining a driving mode of the vehicle; and
   adjusting damping force of the shock absorber based on the driving mode of the vehicle.

4. The control method for the suspension assembly according to claim 3, wherein the driving mode of the vehicle comprises a first driving mode and a second driving mode, and the adjusting the damping force of the shock absorber based on the driving mode of the vehicle comprises:

   when the driving mode of the vehicle is the first driving mode, adjusting the damping force of the shock absorber based on a first damping force curve; or
   when the driving mode of the vehicle is the second driving mode, adjusting the damping force of the shock absorber based on a second damping force curve, wherein the first driving mode is different from the second driving mode, and damping force change rates of the first damping force curve and the second damping force curve are different.

5. The control method for the suspension assembly according to any one of claims 1 to 4, wherein controlling the shock absorber based on the vehicle body adjustment height comprises:

when the vehicle body adjustment height is greater than zero and less than or equal to an adjustable height of the vehicle body, controlling the shock absorber to lift the vehicle body, wherein the adjustable height is configured to: be determined based on a maximum height of the vehicle body and the current height of the vehicle body.

6. The control method for the suspension assembly according to any one of claims 1 to 5, wherein controlling the shock absorber based on the vehicle body adjustment height comprises:
   when the vehicle body adjustment height is greater than the adjustable height of the vehicle body, controlling the shock absorber to generate a thrust to cause the vehicle to jump, wherein the adjustable height is configured to: be determined based on the maximum height of the vehicle body and the current height of the vehicle body.

7. The control method for the suspension assembly according to claim 6, wherein controlling the shock absorber to generate the thrust to cause the vehicle to jump comprises:

   controlling the shock absorber based on a first current to cause the shock absorber to store energy; and
   controlling the shock absorber based on a second current to cause the shock absorber to generate the thrust for controlling the vehicle to jump, wherein a direction of the first current is opposite to a direction of the second current.

8. The control method for the suspension assembly according to claim 7, wherein the step of controlling the shock absorber based on the first current to cause the shock absorber to store energy comprises:
   outputting a first current in a first direction to a linear motor to compress an elastic device, so that the elastic device stores energy, wherein the shock absorber comprises the linear motor and the elastic device.

9. The control method for the suspension assembly according to claim 8, wherein the step of controlling the shock absorber based on the second current to cause the shock absorber to generate the thrust for controlling the vehicle to jump comprises:
   outputting a second current in a second direction to the linear motor and controlling the elastic device to release the stored energy to jointly generate an upward thrust on the vehicle body, so that the vehicle jumps to safely avoid an obstacle.

10. The control method for the suspension assembly according to claim 9, wherein the first current and the second current are determined based on the vehicle body adjustment height, the adjustable height, and an elastic parameter of the elastic device.

11. The control method for the suspension assembly according to claim 9, wherein after the step of outputting the second current in the second direction to the linear motor and controlling the elastic device to release the stored energy to jointly generate the upward thrust on the vehicle body, so that the vehicle jumps, the control method further comprises:
outputting a current to the linear motor to provide a pulling force to a wheel end of the vehicle, to increase a distance between a wheel of the vehicle and the ground.

12. The control method for the suspension assembly according to any one of claims 8 to 11, wherein the control method further comprises:
when the vehicle lands, converting kinetic energy of the wheel into electric energy by using the linear motor to be fed back to a battery of the vehicle.

13. A control system for a suspension assembly, wherein the suspension assembly comprises a shock absorber and a plurality of control arms, the shock absorber is connected between a vehicle body and one of the plurality of control arms, and the control system comprises:

an obtaining module, configured to obtain road condition information and a current height of the vehicle body;
a determining module, configured to determine a vehicle body adjustment height based on the road condition information and the current height of the vehicle body; and
a control module, configured to control the shock absorber based on the vehicle body adjustment height to adjust a height of the vehicle body or control a vehicle to jump.

14. A vehicle, comprising a memory, a processor, and a control program stored in the memory and executable on the processor, the processor, when executing the control program, implementing the control method for the suspension assembly according to any one of claims 1 to 11.

Obtain road condition information and a current height of
the vehicle body

Determine a vehicle body adjustment height based on the
road condition information and the current height of the
vehicle body

Control the shock absorber based on the vehicle body
adjustment height to increase a ground clearance of the
vehicle body, so that the vehicle safely crosses an obstacle

FIG. 1

```
┌─────────────────────────────────┐
│  Obtain road condition          │
│  information and a               │
│  current height of the vehicle   │
│  body                            │
└─────────────────────────────────┘
                │
                ▼
┌─────────────────────────────────┐
│  Determine a vehicle body        │
│  adjustment height               │
│  ΔH based on the road            │
│  condition information           │
│  and the current height of the   │
│  vehicle body                    │
└─────────────────────────────────┘
```

Obtain road condition information and a current height of the vehicle body

Determine a vehicle body adjustment height ΔH based on the road condition information and the current height of the vehicle body

$\Delta H \leq 0$

No →

$0 < \Delta H \leq L$

No →

Control the shock absorber to generate the thrust to cause the vehicle to jump

Yes

Obtain a driving mode of the vehicle

Yes

Control the shock absorber to lift the vehicle body

Control the shock absorber based on a first current to cause the shock absorber to store energy; and control the shock absorber based on a second current to cause the shock absorber to generate the thrust for controlling the vehicle to jump, where a direction of the first current is opposite to a direction of the second current

When the driving mode of the vehicle is the first driving mode, adjust the damping of the shock absorber based on a first damping force curve; or when the driving mode of the vehicle is the second driving mode, adjust the damping of the shock absorber based on a second damping force curve

Output a current to the linear motor to provide a pulling force to a wheel end of the vehicle, to increase a distance between a wheel of the vehicle and the ground

FIG. 2

12

FIG. 3

FIG. 4

FIG. 5

FIG. 6

FIG. 7

FIG. 8

## INTERNATIONAL SEARCH REPORT

| International application No. |
| --- |
| **PCT/CN2024/070641** |

### A.    CLASSIFICATION OF SUBJECT MATTER

B60G 13/00(2006.01)i

According to International Patent Classification (IPC) or to both national classification and IPC

### B.    FIELDS SEARCHED

Minimum documentation searched (classification system followed by classification symbols)

IPC:B60G

Documentation searched other than minimum documentation to the extent that such documents are included in the fields searched

Electronic data base consulted during the international search (name of data base and, where practicable, search terms used)

CNABS, CNTXT, ENTXTC, SIPOABS, VEN, CNKI: 悬架, 控制, 路况, 高度, 调节, 减振器, vehicl+, height+, high+, control +, suspens+, ground+.

### C.    DOCUMENTS CONSIDERED TO BE RELEVANT

| Category* | Citation of document, with indication, where appropriate, of the relevant passages | Relevant to claim No. |
| --- | --- | --- |
| Y | CN 108944326 A (JIANGSU UNIVERSITY) 07 December 2018 (2018-12-07) description, paragraphs 0005-0056, and figures 1-3 | 1-14 |
| Y | CN 104015581 A (JIANGSU UNIVERSITY) 03 September 2014 (2014-09-03) description, paragraphs 0007-0044, and figures 1-4 | 1-14 |
| A | CN 106143039 A (HEBEI JIADE ENGINEERING TECHNOLOGY CO., LTD.) 23 November 2016 (2016-11-23) entire document | 1-14 |
| A | CN 111016564 A (SAIC MOTOR CORP., LTD.) 17 April 2020 (2020-04-17) entire document | 1-14 |
| A | CN 111703268 A (CHINA FAW GROUP CO., LTD.) 25 September 2020 (2020-09-25) entire document | 1-14 |
| A | CN 113580867 A (BYD CO., LTD.) 02 November 2021 (2021-11-02) entire document | 1-14 |
| A | DE 102009046055 A1 (ROBERT BOSCH GMBH) 05 May 2011 (2011-05-05) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 April 2024** | **09 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070641**

| Patent document cited in search report | | | Publication date (day/month/year) | Patent family member(s) | Publication date (day/month/year) |
|---|---|---|---|---|---|
| CN | 108944326 | A | 07 December 2018 | None | |
| CN | 104015581 | A | 03 September 2014 | None | |
| CN | 106143039 | A | 23 November 2016 | None | |
| CN | 111016564 | A | 17 April 2020 | None | |
| CN | 111703268 | A | 25 September 2020 | None | |
| CN | 113580867 | A | 02 November 2021 | None | |
| DE | 102009046055 | A1 | 05 May 2011 | None | |

Form PCT/ISA/210 (patent family annex) (July 2022)

**EP 4 674 651 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310473696